**Europäisches Patentamt**

(19) **European Patent Office** (11) Numéro de publication: **0 178 971**

**Office européen des brevets** **B1**

(12) **FASCICULE DE BREVET EUROPÉEN**

(45) Date de publication du fascicule du brevet: **23.11.88**

(51) Int. Cl.⁴: **B 25 J 5/00,** F 22 B 37/00

(21) Numéro de dépôt: **85401787.8**

(22) Date de dépôt: **16.09.85**

(54) Robot porte-outil pour effectuer des interventions à l'intérieur d'une enceinte possédant une ouverture d'accès.

(30) Priorité: **20.09.84 FR 8414433**

(43) Date de publication de la demande:
**23.04.86 Bulletin 86/17**

(45) Mention de la délivrance du brevet:
**23.11.88 Bulletin 88/47**

(84) Etats contractants désignés:
**BE DE GB SE**

(56) Documents cité:
**EP-A-0 030 484**
**EP-A-0 124 824**
**FR-A-2 375 011**
**FR-A-2 398 583**
**FR-A-2 500 354**
**US-A-3 861 987**

(73) Titulaire: **COMMISSARIAT A L'ENERGIE ATOMIQUE, 31/33, rue de la Fédération, F-75015 Paris (FR)**

(72) Inventeur: **Germond, Jean- Claude, 22, rue de Tolbiac, F-75013 Paris (FR)**
Inventeur: **Clement, Gilles, 118, rue d'Avron, F-75020 Paris (FR)**

(74) Mandataire: **Mongrédien, André, c/o BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un robot porte-outil permettant d'effectuer toutes sortes d'interventions à l'intérieur d'une enceinte close possédant une ouverture d'accès.

Elle vise plus particulièrement à permettre l'entretien et les réparations des boîtes à eau des générateurs de vapeur des centrales nucléaires à eau légère pressurisée.

La boîte à eau d'un générateur de vapeur est constituée dans certains modèles courants par une enceinte hémisphérique délimitée par un plan diamétral constitué par la plaque tubulaire de l'échangeur disposé horizontalement en partie supérieure. La boîte à eau est séparée verticalement, en une demi-boîte chaude et une demi-boîte froide, par une cloison verticale de séparation passant par le plan médian de la demi-sphère. Chaque demi-boîte à eau constitue ainsi une enceinte close en forme de quart de sphère sur laquelle est prévue au moins une ouverture d'accès de forme sensiblement cylindrique et orientée suivant un rayon de la sphère.

Chaque ouverture d'accès, appelée "trou d'homme", possède des dimensions permettant à un opérateur de pénétrer après vidange à l'intérieur de l'enceinte lorsque des interventions doivent y être effectuées. Le trou d'homme est situé à la partie basse du générateur de vapeur. L'inclinaison de l'axe de l'ouverture est d'environ 45° par rapport à la verticale. En fonctionnement normal du générateur de vapeur, le trou d'homme est obturé par un tampon d'obturation goujonné sur une bride circulaire délimitant le trou d'homme.

Les opérations à effectuer à l'intérieur des boîtes à eau sont de divers types.

Il est d'abord envisagé de procéder régulièrement à la décontamination des parois internes des demi-boîtes qui sont superficiellement fortement contaminées en éléments irradiants. Cette décontamination permet d'améliorer les conditions de travail du personnel ayant à intervenir tant à l'intérieur des demi-boîtes où règne un rayonnement très important qu'à l'extérieur, et en particulier au voisinage du trou d'homme. Les procédés de décontamination à mettre en oeuvre sont soit chimiques, soit mécaniques (sablage à l'eau sous forte pression).

Lors de chaque arrêt de fonctionnement, une opération d'inspection systématique de l'état des tubes de chaque générateur est effectuée par divers procédés dont l'un consiste à contrôler chaque tube en y introduisant une sonde à courants de Foucault. Cette inspection systématique et réglementaire vise à détecter les différentes altérations pouvant apparaître en cours d'exploitation: fissuration des tubes, striction de ceux-ci due à la corrosion des plaques entretoises intermédiaires, bouchage des tubes... Les tubes fuitards ou défectueux doivent alors être réparés ou obturés ce qui requiert de nombreux outillages de mise en oeuvre délicate compte tenu de l'environnement.

Il est enfin utile de pouvoir inspecter et réparer la plaque tubulaire proprement dite qui peut être endommagée par des corps migrants transportés par l'eau du circuit primaire.

Toutes les opérations à effectuer à l'intérieur d'enceintes fortement contaminées en éléments irradiants présentent des dangers importants pour le personnel d'intervention qui est exposé à un fort rayonnement radioactif.

Afin de minimiser ou de supprimer les interventions humaines, on a déjà proposé diverses solutions qui peuvent être regroupées en deux catégories de dispositifs.

Première catégorie, les dispositifs télécommandés d'interventions sur les tubes.

Un grand nombre d'opérations à effectuer sur les tubes étaient effectuées manuellement par un opérateur qui devait pénétrer à plusieurs reprises pour mettre en place les outils sur la plaque tubulaire. Un premier dispositif porte-outil connu sous le nom d'"araignée" a permis de mécaniser les déplacements des outils sur la plaque tubulaire. Toutefois, l'araignée doit être mise en place par un opérateur, ce dernier devant également procéder aux changements d'outils et à la dépose de l'araignée en fin d'opération. Par ailleurs, l'araignée évolue très lentement et présente une garantie de fonctionnement limitée, notamment dans le cas où certains tubes sont obturés sur lesquels elle ne peut se fixer. Enfin, l'araignée ne pouvant être repérée en position que par comptage du nombre de pas effectués, il est impossible d'effectuer le repérage absolu de la position du tube exploré.

Un autre type de porte-outil à fixation sur la plaque a été proposé dans la demande de brevet d'invention français publiée sous le numéro 2 211 721. Si ce type de porte-outil présente certains avantages par rapport à l'araignée, tels un repérage absolu des tubes, des déplacements rapides et la possibilité de monter plusieurs types d'outils, il possède toutefois des inconvénients importants tels que son encombrement, l'occultation d'une rangée de tubes sur lesquels il est impossible d'intervenir, et l'entrée de personnel humain pour sa mise en place et sa dépose.

On a également décrit dans la demande de brevet d'invention français publiée sous le numéro 2 394 374 un dispositif de mise en place d'un porte-outil de type "araignée" afin de réduire les entrées de personnel dans les boîtes à eau. Ce dispositif permet d'amener l'araignée sur la plaque tubulaire depuis l'extérieur, puis de la retirer, mais après avoir préalablement procédé à la mise en place manuelle d'un mât fixe de guidage à l'intérieur de la boîte.

D'autres dispositifs "porte-araignées" présentant les mêmes inconvénients ont été proposés tels que par exemple celui décrit et représenté dans le brevet US-3 913 752.

Deuxième catégorie, les dispositifs télécommandés d'intervention sur l'ensemble des éléments constitutifs d'une demi-boîte à eau.

Ces dispositifs ont essentiellement été développés pour permettre la décontamination mécanique et doivent de ce fait pouvoir atteindre non seulement la plaque tubulaire mais également la plaque de séparation et la paroi interne du bol sphérique.

Un premier type de dispositif a été proposé, qui consiste en un bras dont une extrémité est articulée par une articulation sphérique sur une plaque fixée au voisinage du centre de la sphère sur la plaque tubulaire ; un chariot porte-outil est monté coulissant sur le bras et porte une buse de décontamination à orientation fixe. Ce dispositif nécessite toujours l'intervention de personnel pour effectuer sa mise en place à l'intérieur de la boîte à eau, ainsi que l'intervention d'un opérateur devant le trou d'homme pour modifier l'orientation de la buse de décontamination lors du changement de surface à balayer. Ce dispositif occulte également la portion de plaque tubulaire et les tubes correspondants situés sous sa plaque d'ancrage.

L'état de la technique le plus proche dans le sense de l'article 54(3) est représenté par le brevet EP-A-124 824, publié le 14.11.84.

La présente invention a pour but de proposer un dispositif d'intervention qui remédie aux inconvénients des dispositifs qui viennent d'être mentionnés en permettant notamment toutes les interventions tant sur la plaque tubulaire que sur la plaque de séparation et sur le bol sphérique tout en supprimant toute intervention humaine à l'intérieur des demi-boîtes à eau et en permettant le changement d'outil à l'extérieur de l'enceinte sans dépose du dispositif.

A cet effet, l'invention propose un robot porte-outil pour effectuer des interventions à l'intérieur d'une enceinte possédant une ouverture d'accès cylindrique, caractérisé en ce qu'il comporte une virole cylindrique fixée sur ladite ouverture, un fût cylindrique monté à rotation dans la virole, un rail de guidage axial parallèle à l'axe dudit fût fixé sur la paroi interne de ce dernier et dans lequel un premier bras est monté coulissant, un second bras monté pivotant à l'extrémité libre du premier bras autour d'un àxe perpendiculaire à l'axe dudit fût, et un chariot porte-outil monté coulissant sur le second bras.

Une telle structure de robot ne nécessite comme seule intervention humaine à l'extérieur des boîtes à eau, que celles nécessaires d'une part à la mise en place de la virole cylindrique, en lieu et place du tampon d'obturation du trou d'homme puis de la pose des bras sur le rail et d'autre part au changement d'outil. Cette dernière opération est rendue possible depuis l'extérieur grâce à la disposition du rail de guidage sur la paroi interne du fût cylindrique, c'est-à-dire dans une position excentrée permettant de dégager un espace libre, ou tunnel, à l'intérieur du fût pour permettre le déplacement de l'ensemble constitué par le premier bras, le second bras et le chariot porte-outil à l'extérieur de la demi-boîte à eau.

Plus précisément, le rail de guidage occupe seulement une partie d'une section transversale du fût cylindrique, et laisse libre un espace de passage pour le passage dudit second bras et de ses outils, de manière à permettre un changement d'outil depuis l'extérieur de l'enceinte sans dépose du robot porte-outil.

La conjugaison de la rotation du fût cylindrique autour de son axe et du pivotement du second bras autour de son axe d'articulation constitue une articulation sphérique.

Toutefois, étant donné la position généralement occupée par le trou d'homme, cette articulation sphérique seule ne permet pas d'atteindre tous les points de la paroi interne de la demi-boîte à eau avec une orientation constante de l'outil.

Afin de résoudre ce problème, le second bras comprend une première partie montée pivotante à l'extrémité libre du premier bras et une seconde partie, prolongeant la première partie, montée tournante autour de son axe longitudinal par rapport à la première partie et sur laquelle le chariot porte-outil est monté coulissant.

Par ailleurs, l'axe géométrique dudit premier bras est décalé angulairement d'un angle $\alpha$ par rapport à l'axe géométrique de l'ouverture d'accès cylindrique de manière que le centre de l'articulation sphérique du second bras sur le premier bras puisse être amené au voisinage d'une perpendiculaire passant par le centre géométrique du bol.

De préférence, le décalage angulaire $\alpha$ du premier bras est obtenu à l'aide d'une couronne intercalée entre l'ouverture d'accès et la virole de fixation, ladite couronne ayant des faces d'appui décalées angulairement dudit angle $\alpha$.

Le robot selon la présente invention présente également une grande sûreté de fonctionnement. Il est en effet possible d'intervenir rapidement sur l'outil en cas de panne par repliement des bras. De plus, en cas de panne sur la commande des mouvements du robot, une intervention reste possible par des dispositifs qui peuvent être introduits manuellement par le tunnel dégagé mentionné plus haut par un ringard agissant sur l'axe de rotation des moteurs.

Afin d'améliorer encore la fiabilité technologique de l'ensemble, le moteur assurant l'entraînement en rotation du fût par rapport à la virole est monté sur cette dernière à l'extérieur de l'enceinte, cette disposition garantissant la possibilité d'intervenir rapidement sur le mouvement correspondant.

Selon une application préférée, l'enceinte, à l'intérieur de laquelle on intervient est constituée par une boîte à eau de générateur de vapeur, l'ouverture d'accès étant constituée par le trou d'homme de ladite enceinte.

On décrira maintenant un mode de réalisation de l'invention en se référant aux dessins annexés, dans lesquels:

- la figure 1 est une vue en perspective de la partie inférieure d'un générateur de vapeur de centrale nucléaire équipé d'un robot porte-outil réalisé conformément aux enseignements de la présente invention, et représenté en position déployée.

- la figure 2 est une vue en coupe selon un plan médian passant par l'axe du fût cylindrique de la figure 1 et dans lequelle les bras du robot et le chariot porte-outil sont représentés en position repliée;

- la figure 3 est une section selon le plan III - III du fût cylindrique de la figure 1 par un plan perpendiculaire à l'axe de ce dernier; et

- la figure 4 est un schéma destiné à expliquer l'intérêt d'un décalage angulaire de l'axe du fût cylindrique par rapport à l'axe du trou d'homme.

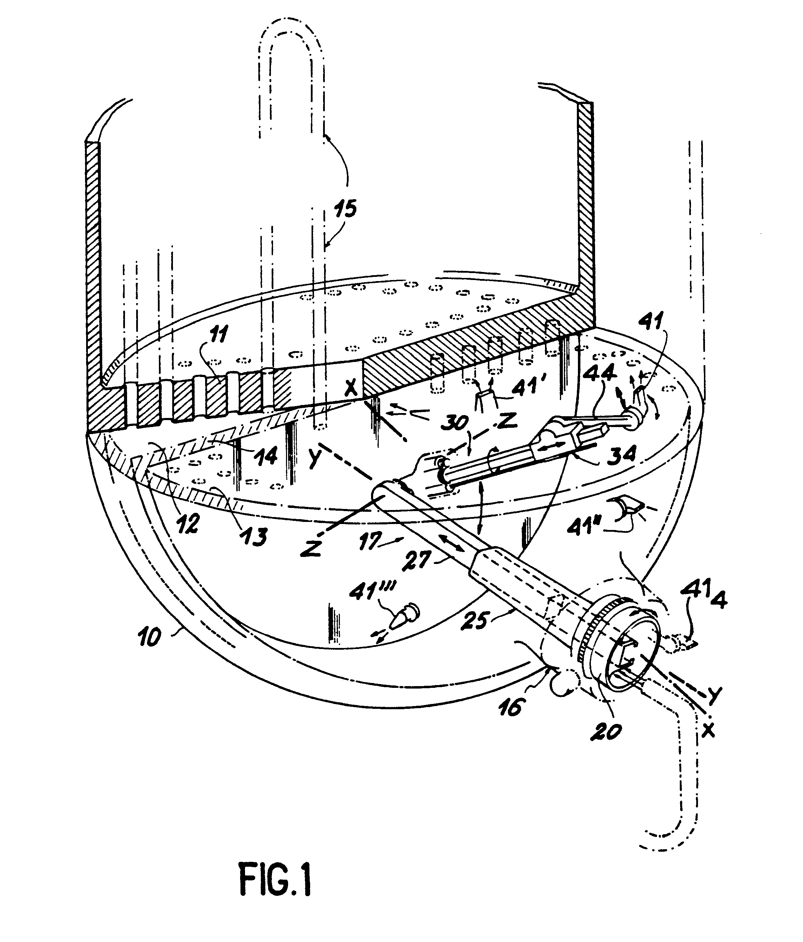

On a représenté à la figure 1 la partie inférieure d'un générateur de vapeur de centrale nucléaire constituée par une boîte à eau 10 de forme générale hémisphérique. Le bol hémisphérique 10 est délimité à sa partie supérieure par une plaque tubulaire plane 11 disposée sensiblement horizontalement. Le bol 10 est divisé en deux demi-boîtes à eau 12 et 13 séparées par une cloison verticale de séparation 14 passant par un plan médian de la demi-sphère 10. On a également représenté, figure 1, un tube en "épingle à cheveux" 15 reliant la demi-boîte à eau 12 à la demi-boîte à eau 13 et dont les extrémités inférieures sont fixées dans la plaque tubulaire 11 de part et d'autre de la cloison verticale de séparation 14.

Chacune des demi-boîtes à eau 12 et 13 constitue une enceinte close à l'intérieur de laquelle il est possible de pénétrer par une ouverture d'accès cylindrique 16 appelée trou d'homme. Seul le trou d'homme 16 de la demi-boîte à eau 13 est représenté à la figure 1. L'axe X - X du trou d'homme cylindrique 16 est disposé selon un rayon de la sphère géométrique du bol 10. Il est généralement situé à environ 45° de la plaque tubulaire et à 45° de la cloison verticale 14 (bissectrice d'1/8 de sphère). Chaque demi-boîte comporte également une entrée ou une sortie de tuyauterie primaire de diamètre plus important que le trou d'homme situé symétriquement par rapport à un plan diamétral perpendiculaire à la cloison 4.

La demi-boîte à eau 13 est équipée d'un robot porte-outil 17 réalisé conformément aux enseignements de la présente invention.

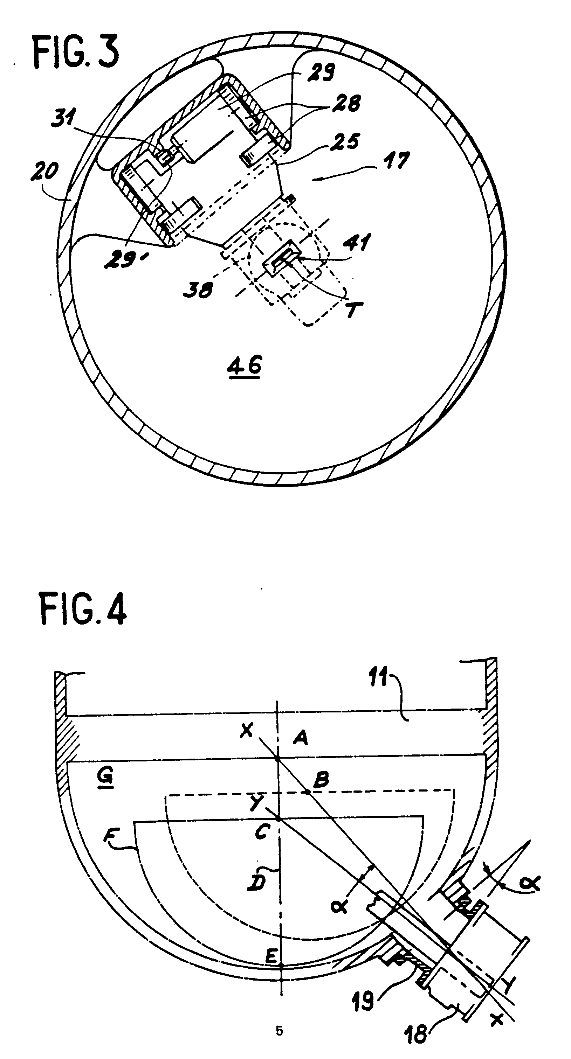

Le robot 17 comprend une virole cylindrique de fixation 18. La virole de fixation 18 est fixée sur le trou d'homme 16 à l'aide d'une couronne 19 qui, comme on peut le constater à la figure 4, présente deux faces non parallèles de façon à provoquer une inclinaison $\alpha$ de l'axe géométrique Y - Y de la virole cylindrique de fixation 18 par rapport à l'axe géométrique X - X du trou d'homme, et ceci dans un but qui sera expliqué plus loin.

Le robot 17 comprend également un fût cylindrique 20 coaxial à la virole 18 et monté à rotation dans cette dernière à l'aide de roulements 21 et 22.

Le fût cylindrique 20 s'étend depuis la virole 18 vers l'intérieur de la demi-boîte à eau 13 selon l'axe géométrique Y - Y commun au fût et à la virole et qui est également l'axe géométrique de rotation du fût 20.

La rotation du fût 20 autour de son axe Y - Y est commandée par un moteur électrique 23 qui, par l'intermédiaire d'un jeu de pignons, entraîne en rotation une couronne dentée 24 rapportée sur la paroi externe du fût cylindrique 20. Conformément à l'invention, le moteur 23 est monté sur la virole 18 et à l'extérieur de la demi-boîte à eau 13 afin de permettre une intervention aisée en cas de panne.

Comme on peut le constater sur les figures, le robot 17 comporte un rail de guidage axial 25, parallèle à l'axe géométrique Y - Y du fût 20 et fixé sur la paroi interne de ce dernier.

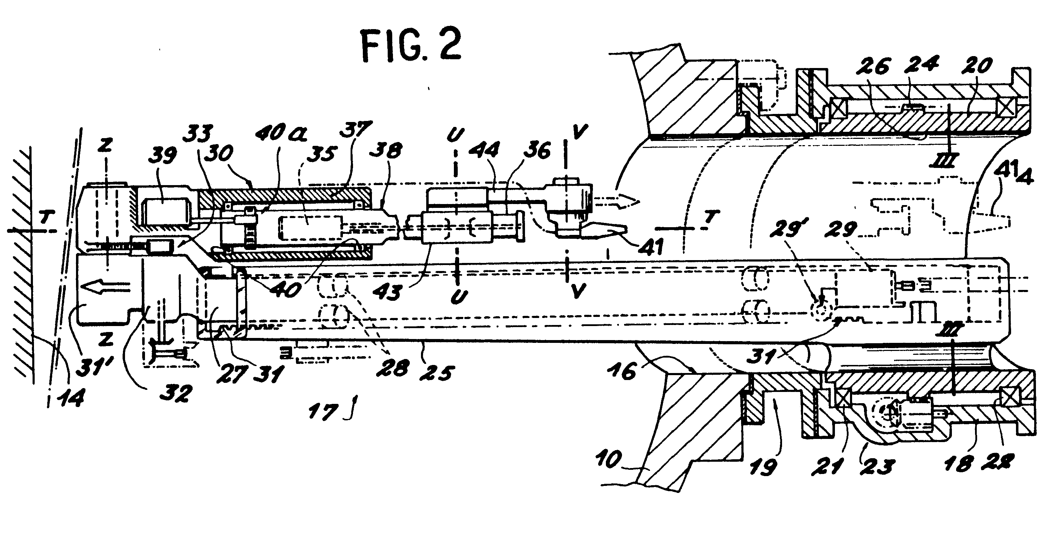

Le rail de guidage 25 présente une section ouverte carrée dans laquelle un premier bras 27 du robot 17 est monté coulissant. Le premier bras 27 est monté coulissant dans le rail de guidage 25 à l'aide de galets 28 schématisés à la figure 2.

Les mouvements de coulissement du premier bras 27 parallèlement à sa direction dans le rail 25 sont commandés par un moteur électrique 29 monté dans le bras 27 et dont le pignon de sortie 29' coopère avec une crémaillère 31 formée à l'intérieur du rail 25. Le moteur 29, le moteur 23 ainsi que tous les autres moteurs de commande du robot 17 sont des moto-réducteurs électriques à courant continu commandés à vitesse variable.

Le robot 17 comprend un second bras 30 monté pivotant à l'extrémité libre du premier bras 27.

Le second bras 30 est monté pivotant sur le premier bras 27 autour d'un axe de rotation Z - Z concourant et perpendiculaire à l'axe géométrique et de rotation Y - Y du fût cylindrique 20.

Le mouvement de pivotement du second bras 30 autour de l'axe géométrique Z - Z est commandé par un moteur électrique 32 et un jeu de pignons 33. Le moteur électrique 32, comme le moteur 29, présente un embout carré qui est actionné manuellement par un ringard à embout carré femelle qui agit sur l'axe de rotation de chacun de ces moteurs.

La combinaison de la rotation du fût 20 autour de son axe Y - Y et du pivotement du second bras 30 autour de son axe de pivotement Z - Z définit une articulation de type sphérique qui, lorsque le premier bras 27 est en position déployée maximale, est située au plus près du centre géométrique de la demi-sphère constituant le bol 10. Cette disposition mécanique permet de simplifier grandement la commande du robot et est particulièrement adaptée à la géométrie de la boîte à eau.

Le robot 17 comprend également un chariot porte-outil 34 monté coulissant sur le second bras 30 parallèlement à l'axe longitudinal général T - T de ce dernier.

Le mouvement de coulissement du chariot 34 sur le second bras 30 est assuré au moyen d'un moteur 35 et par exemple d'un système vis-écrou 36.

Dans le cas de l'application du robot 17 aux opérations à l'intérieur d'une boîte à eau de générateur de vapeur, dans laquelle l'axe de l'ouverture d'accès cylindrique constituée par le trou d'homme 16 n'est pas perpendiculaire à la plaque tubulaire 11, on remarque qu'il est nécessaire de rétablir l'orientation du chariot porte-outil 34 par rapport au plan de la plaque tubulaire 11 et ce pour effectuer un balayage correct de cette dernière.

Dans ce but, le second bras 30 est réalisé en deux parties. Il comprend une première partie 37 montée pivotante sur l'extrémité libre 31' du premier bras 27 et une seconde partie 38, prolongeant la première partie 37.

La seconde partie 38 du second bras 30 est montée tournante autour de son axe longitudinal général T - T par rapport à la première partie 37 à l'aide de roulements 40.

Le chariot 34 dont on doit rétablir l'orientation est monté coulissant sur la seconde partie 38 du second bras 30.

Le mouvement de rotation de la seconde partie 38 du second bras 30 par rapport à la première partie 37 est commandé par un moteur électrique 39, intégré à la première partie 37, et un jeu de pignons 40a.

On décrira maintenant en se référant au schéma de la figure 4, l'avantage résultant de l'inclinaison angulaire de l'axe géométrique Y - Y du fût 20 par rapport à l'axe X - X du trou d'homme 16.

En position haute, c'est-à-dire lorsque le premier bras 27 est entièrement déployé, le centre de l'articulation sphérique définie plus haut ne coïncide pas exactement avec le centre géométrique A de la demi-sphère 10.

Si les axes X - X et Y - Y étaient confondus, le centre de l'articulation sphérique serait situé au point B, c'est-à-dire dans une position décalée axialement (vers la droite en considérant la figure 4) par rapport à la perpendiculaire D à la plaque 11 passant par le centre A de la sphère.

L'inclinaison d'un angle α de l'axe Y - Y par rapport à l'axe X - X permet d'amener le centre de l'articulation sphérique en un point C situé sur la droite D et dans le plan de symétrie de la demi-boîte à eau.

Cette disposition facilite la commande du robot en permettant notamment de rendre symétriques ses déplacements.

Le robot représenté sur les figures correspond à une application particulière assurant la décontamination des parois à l'aide d'une buse de sablage 41 représentée sur le chariot porte-outil 34 en diverses autres positions de travail 41', 41'', 41''', etc... représentées sur la figure 1. Dans la position $41_4$, (voir figures 1 et 2) l'outil est situé à l'extérieur de la boîte à eau et peut par conséquent être changé sans dépose du dispositif.

Dans les opérations de décontamination, il est important que la buse 41 présente une orientation constante par rapport à la paroi de la boîte à eau.

A cet effet, le chariot porte-outil 34 est constitué d'un châssis 43 monté coulissant sur le second bras 30 et sur lequel un segment 44 est monté pivotant par l'une de ses extrémités 44 autour d'un axe U - U perpendiculaire à l'axe longitudinal T - T du second bras 30.

La buse 41 est montée dans un dispositif porte-outil 45 monté pivotant sur la seconde extrémité 46 du segment 44 autour d'un axe V - V également perpendiculaire à l'axe T - T et parallèle à l'axe U - U. Le mouvement de rotation du porte-outil 45 et de la buse 41 n'est pas motorisé. Un montage en parallèlogramme en assure sa rotation.

Les deux axes T - T et V - V sont bien entendu des axes motorisés et commandés simultanément ou indépendamment.

La translation du chariot porte-outil 34 ne peut atteindre ni dépasser l'articulation sphérique définie plus haut (intersection des axes Y - Y et 11), le retournement du segment 44 autour de l'axe de pivotement U - U permet d'atteindre les tubes de la plaque 11 situés à proximité du centre géométrique de la sphère.

De plus, et comme on peut le constater sur la figure 4, l'extrémité libre du second bras 30 décrit une sphère F qui n'est tangente avec la sphère du bol 10 qu'en un seul point E. La longueur du second bras 30 est donc nécessairement réduite ce qui ne permet pas d'atteindre certaines zones G. Le segment 44 prolongeant le bras 30 assure alors la couverture de ces zones.

Les systèmes de commande informatiques des actionneurs électriques du robot ne diffèrent pas des systèmes classiques utilisés pour la commande de robots et ne seront pas décrits ici. On remarque cependant que la disposition cinématique du robot facilite grandement l'élaboration de la commande automatique.

La mise en place du robot sur la demi-boîte à eau s'effectue très simplement par un opérateur situé à l'extérieur de l'enceinte.

Après avoir ôté le tampon du trou d'homme 16, l'opérateur vient fixer en position à l'aide de goujons un premier module démontable constitué par la couronne 19, la virole 18, le fût 20 et le rail 25. L'opérateur met ensuite en place le premier bras 27 dans le rail de guidage 25. Après avoir mis en place le second bras 30 équipé de son chariot porte-outil 34 à l'extrémité libre 31 du premier bras 30, dans sa position repliée représentée à la figure 2, l'opérateur n'a plus qu'à fixer un outil avant de faire pénétrer l'ensemble mobile à l'intérieur de la demi-boîte à eau ; cette pénétration se fait en commandant le coulissement du premier bras 27 en position haute, c'est-à-dire vers la gauche en considérant la figure 2. Lorsque la position haute est atteinte, le robot peut être déployé librement à l'intérieur de la demi-boîte à eau en commandant l'actionnement des divers moteurs 23, 32, 39 et 35.

Lorsque l'opérateur désire procéder au changement de l'outil équipant le chariot porte-outil 34, il lui suffit dans un premier temps de ramener les premier et second bras 27 et 30 dans leur position repliée représentée sur la figure 2 en assurant un positionnement convenable du chariot 34 et du segment 44. A partir de cette position, il suffit ensuite de commander le coulissement du premier bras 27 dans le rail de guidage 25 vers l'extérieur de la boîte à eau, c'est-à-dire vers la droite en considérant la figure 2. Ce coulissement se prolonge jusqu'à ce que l'outil franchisse le plan de la virole 18 (dans lequel il est représenté en pointillés à la figure 2) pour émerger ensuite à l'extérieur dans une position dans laquelle il est accessible à l'opérateur.

Ce changement d'outil sans aucun démontage du robot ni opération manuelle à l'intérieur de la demi-boîte à eau est rendu possible par l'excentrement du rail de guidage 25 à l'intérieur du fût 20 qui permet de laisser un passage libre 46 constituant un tunnel d'accès pour l'outil à l'intérieur de la demi-boîte à eau.

Ainsi, le robot de l'invention présente les avantages suivants:

- utilisation du trou d'homme pour la fixation du robot,
- examen au nettoyage de toutes les surfaces internes de la boîte à eau: bol, plaque de partition, plaque tubulaire et tubes de la plaque à tubes,
- fixation du robot contre la bride du trou d'homme sans l'obturer de façon à sortir le robot replié à l'extérieur du générateur de vapeur sans contamination extérieure,
- aucune intervention humaine à l'intérieur de la boîte à eau,
- changement d'outils à l'extérieur du générateur de vapeur,
- modularité du robot,
- en cas d'incident repliement manuel des bras,
- mise en place rapide du robot à l'extérieur du générateur de vapeur sur le rail d'introduction.

**Revendications**

1. Robot porte-outil (17) pour effectuer des interventions à l'intérieur d'une enceinte (13) possédant une ouverture d'accès cylindrique (16), comportant une virole cylindrique (18) fixée sur ladite ouverture, un fût cylindrique (20) monté à rotation dans la virole (18), un rail (25) de guidage axial parallèle à l'axe (Y - Y) dudit fût, fixé sur la paroi interne (26) de ce dernier et dans lequel un premier bras (27) est monté coulissant, un second bras (30) monté pivotant à l'extrémité libre (31) du premier bras (27) autour d'un axe (Z - Z) perpendiculaire à l'axe (Y - Y) dudit fût, et un chariot porte-outil (34) monté coulissant sur le second bras.

2. Robot porte-outil selon la revendication 1, caractérisé en ce que le second bras (30) comprend une première partie (37) montée pivotante à l'extrémité libre (31') du premier bras (27) et une seconde partie (38), prolongeant la première partie, montée tournante autour de son axe longitudinal (T - T) par rapport à la première partie (37) et sur laquelle le chariot porte-outil (34) est monté coulissant.

3. Robot porte-outil selon l'une des revendications 1 ou 2, caractérisé en ce qu'il comporte un moteur (23) d'entraînement en rotation du fût (20) par rapport à la virole (18) monté sur cette dernière à l'extérieur de l'enceinte.

4. Robot porte-outil selon l'une quelconque des revendications 1 à 3, caractérisé en ce que le chariot porte-outil (34) comporte un châssis (43) monté coulissant sur le second bras (30) sur lequel un segment (44) est monté pivotant par l'une de ses extrémités autour d'un axe (U - U) perpendiculaire à l'axe longitudinal (T - T) du second bras (30).

5. Robot porte-outil selon la revendication 4, caractérisé en ce que l'autre extrémité dudit segment (44) est munie d'un dispositif porte-outil (45) monté pivotant autour d'un axe (V - V) perpendiculaire à l'axe longitudinal (T - T) du second bras (30).

6. Robot porte-outil selon la revendication 1, caractérisé en ce que l'axe (Y - Y) du fût (20) est incliné par rapport à l'axe (X - X) de l'ouverture cylindrique d'accès (16) à un angle déterminé ($\alpha$).

7. Robot porte-outil selon la revendication 1, caractérisé en ce qu'un mécanisme de commande permet d'agir manuellement depuis l'extérieur de l'enceinte sur le moteur de translation (29) et de rotation (32).

8. Robot porte-outil selon la revendication 1, caractérisé en ce que l'axe (Z - Z) est concourant à l'axe (Y - Y).

9. Robot porte-outil selon la revendication 2, caractérisé en ce que l'axe (T - T) est concourant à l'axe (Y - Y).

10. Robot porte-outil selon la revendication 3, caractérisé en ce que l'axe (U - U) est concourant à l'axe (T - T).

11. Robot porte-outil selon l'une quelconque des revendications 1 à 10, caractérisé en ce que le rail de guidage (25) occupe seulement une partie d'une section transversale du fût cylindrique (20), et laisse libre un espace de passage (46) pour le passage dudit second bras (30) et de ses outils (41), de manière à permettre un changement d'outil depuis l'extérieur de l'enceinte (13) sans dépose du robot porte-outil.

12. Robot porte-outil selon l'une quelconque des revendications 1 à 11, caractérisé en ce que l'axe géométrique dudit premier bras (27) est décalé angulairement d'un angle $\alpha$ par rapport à l'axe géométrique de l'ouverture d'accès cylindrique (16) de manière que le centre de l'articulation sphérique du second bras (30) sur le premier bras (17) puisse être amené au voisinage d'une perpendiculaire passant par le centre géométrique du bol.

13. Robot porte-outil sèlon la revendication 12, caractérisé en ce que le décalage angulaire $\alpha$ du premier bras (27) est obtenu à l'aide d'une couronne (19) intercalée entre l'ouverture d'accès (16) et la virole de fixation (18), ladite couronne ayant des faces d'appui décalées angulairement dudit angle α.

14. Robot porte-outil selon l'une quelconque des revendications 1 à 13, caractérisé en ce que l'enceinte (13), à l'intérieur de laquelle on intervient, est constituée par une boîte à eau de générateur de vapeur, l'ouverture d'accès (16) étant constituée par le trou d'homme de ladite enceinte (13).

**Patentansprüche**

1. Werkzeugtragender Roboter (17) für das Ausführen von Arbeiten innerhalb eines mit einer zylindrischen Zugangsöffnung (16) versehenen Behälters (13), enthaltend einen zylindrischen Ring (18), der auf der genannten Öffnung befestigt ist, einen zylindrischen Schaft (20), der in dem Ring (18) drehbar gehalten ist, eine axiale Führungsschiene (25), die parallel zur Achse (Y - Y) des genannten Schaftes verläuft und an der Innenvand (26) des Ringes (18) befestigt ist und in der ein erster Arm (27) gleitend gehalten ist, einen zweiten Arm (30), der am freien Ende (31) des ersten Arms (27) um eine zur Achse (Y - Y) des genannten Schaftes senkrechte Achse (Z - Z) schwenkbar montiert ist, und einen werkzeugtragenden Schlitten (34), der auf dem zueiten Arm verschiebbar gehalten ist.

2. Werkzeugtragender Roboter nach Anspruch 1, dadurch gekennzeichnet, daß der zweite Arm (30) einen ersten Abschnitt (37) enthält, der schwenkbar am freien Ende (31') des ersten Arms (27) montiert ist, und einen zweiten Abschnitt (38) enthält, der den ersten Abschnitt verlängert, um seine Längsachse (T - T) gegenüber dem ersten Abschnitt (37) drehbar montiert ist und auf dem der verkzeugtragende Schlitten (34) gleitend gehalten ist.

3. Werkzeugtragender Roboter nach einem der Ansprüche 1 oder 2, dadurch gekennzeichnet, daß er einen Antriebsmotor (23) zum Drehen des Schaftes (20) gegenüber dem Ring (18) aufweist, der auf letzterem außerhalb des Behälters montiert ist.

4. Werkzeugtragender Roboter nach einem der Ansprüche 1 bis 3, dadurch gekennzeichnet, daß der verkzeugtragende Schlitten (34) ein Chassis (43) enthält, das verschiebbar auf dem zweiten Arm (30) gehalten ist, auf welchem ein Segment (44) durch eines seiner Enden um eine Achse (U - U) schwenkbar montiert ist, die senkrecht zur Längsachse (T - T) des zweiten Arms (30) verläuft.

5. Werkzeugtragender Roboter nach Anspruch 4, dadurch gekennzeichnet, daß das andere Ende des genannten Segments (44) mit einer werkzeugtragenden Vorrichtung (45) versehen ist, die um eine Achse (V - V) schwenkbar montiert ist, die senkrecht zur Längsachse (T - T) des zweiten Arms (30) verläuft.

6. Werkzeugtragender Roboter nach Anspruch 1, dadurch gekennzeichnet, daß die Achse (Y - Y) des Schaftes (20) gegenüber der Achse (X - X) der zylindrischen Zugangsöffnung (16) um einen vorbestimmten Winkel (α) geneigt ist.

7. Werkzeugtragender Roboter nach Anspruch 1, dadurch gekennzeichnet, daß ein Steuermechanismus ermöglicht, von außerhalb des Behälters auf den Motor zur Verschiebung (29) und Drehung (32) einzuwirken.

8. Werkzeugtragender Roboter nach Anspruch 1, dadurch gekennzeichnet, daß die Achse (Z - Z) durch den gleichen Punkt verläuft, wie die Achse (Y - Y).

9. Werkzeugtragender Roboter nach Anspruch 2, dadurch gekennzeichnet, daß die Achse (T - T) durch den gleichen Punkt verläuft, wie die Achse (Y - Y).

10. Werkzeugtragender Roboter nach Anspruch 3, dadurch gekennzeichnet, daß die Achse (U - U) durch den gleichen Punkt verläuft, wie die Achse (T - T).

11. Werkzeugtragender Roboter nach einem der Ansprüche 1 bis 10, dadurch gekennzeichnet, daß die Führungsschiene (25) nur einen Teil eines Querschnittes des zylindrischen Schaftes (20) einnimmt und einen Durchgangsraum (46) für den Durchgang des zweiten Armes (30) und seiner Werkzeuge (41) frei läßt, um einen Werkzeugwechsel von außerhalb des Behälters (13) ohne Abbau des werkzeugtragenden Roboters zu ermöglichen.

12. Werkzeugtragender Roboter nach einem der Ansprüche 1 bis 11, dadurch gekennzeichnet, daß die geometrische Achse des genannten ersten Arms (27) winkelmäßig um einen Winkel α gegenüber der geometrischen Achse der zylindrischen Zugangsöffnung (16) derart versetzt ist, daß die Mitte des Kugelgelenks des zweiten Arms (30) auf dem ersten Arm (17) nahe an eine Senkrechte gebracht werden kann, die durch das geometrische Zentrum des Behälters verläuft.

13. Werkzeugtragender Roboter nach Anspruch 12, dadurch gekennzeichnet, daß der Winkelversatz α des ersten Arms (27) mit Hilfe eines Kranzes (19) erreicht ist, der zwischen die Zugangsöffnung (16) und den Befestigungsring (18) eingesetzt ist, welcher Kranz Anlageflächen aufweist, die um den genannten Winkel α versetzt sind.

14. Werkzeugtragender Roboter nach einem der Ansprüche 1 bis 13, dadurch gekennzeichnet, daß der Behälter (13), in dessen Innenraum man eingreift, von einem Dampfgenerator-Wassertank gebildet ist, wobei die Zugangsöffnung (16) des Behälters (13) von einem Mannloch gebildet ist.

**Claims**

1. Tool holder robot (17) for carrying out interventions within an enclosure (13) having a carrying access opening (16), comprising a cylindrical ferrule (18) fixed to said opening, a cylindrical shaft (20) mounted in rotary manner in the ferrule (18), an axial guide rail (25) parallel to axis (Y - Y) of the shaft, fixed to the inner wall (26) of the latter and in which a first arm (27) is slidingly mounted, a second arm (30) mounted in pivotable manner on the free end (31) of the first arm (27) about an axis (Z - Z) perpendicular to axis (Y - Y) of the shaft and a tool holder carriage (34) slidingly mounted on the second arm.

2. Tool holder robot according to claim 1, characterized in that the second arm (30) compises a first part (37) pivotably mounted on the free end (31') of the first arm (27) and a second part (38), extending the first part, mounted in rotary manner about its longitudinal axis (T - T) with respect to the first part (37) and on which the tool holder carriage (34) is slidingly mounted.

3. Tool holder robot according to one of the claims 1 or 2, characterized in that it has a drive motor (23) for rotating the shaft (20) with respect to the ferrule (18) mounted on the latter outside the enclosure.

4. Tool holder according to any one of the claims 1 to 3, characterized in that the tool holder carriage (34) has a chassis (43) slidingly mounted on the second arm (30) on which a segment (44) is pivotably mounted on one of its ends about an axis (U - U) perpendicular to the longitudinal axis (T - T) of the second arm (30).

5. Tool holder robot according to claim 4, characterized in that the other end of said segment (44) is provided with a tool holder device (45) pivotably mounted about an axis (V - V) perpendicular to the longitudinal axis (T - T) of the second arm (30).

6. Tool holder robot according to claim 1, characterized in that the axis (Y - Y) of the shaft (20) is inclined relative to axis (X - X) of the cylindrical access (16) opening by a given angle (α).

7. Tool holder robot according to claim 1, characterized in that a control mechanism makes it possible to manually act from the outside of the enclosure on the translation (29) and rotation (30) motor.

8. Tool holder robot according to claim 1, characterized in that the axis (Z - Z) is concurrent with axis (Y - Y).

9. Tool holder robot according to claim 2, characterized in that the axis (T - T) is concurrent with the axis (Y - Y).

10. Tool holder robot according to to claim 3, characterized in that the axis (U -U) concurrent with axis (T - T).

11. Tool holder robot according to any one of the claims 1 to 10, characterized in that the guide rail (25) only occupies part of the cross-section of the cylindrical shaft (20) and leaves free a passage space (46) for the second arm (30) and its tools (41), so as to permit a tool change from the outside of the enclosure (13) without removing the tool holder robot.

12. Tool holder robot according to any one of the claims 1 to 11, characterized in that the geometrical axis of the first arm (27) is angularly displaced by an angle (α) relative to the geometrical axis of the cylindrical access opening (16), in such a way that the centre of the spherical articulation of the second arm (30) on the first arm (17) can be brought into the vicinity of the perpendicular passing through the geometrical centre of the bowl.

13. Tool holder robot according to claim 12, characterized in that the angular displacement (α) of the first arm (27) is obtained with the aid of a ring (19) inserted between the access opening (16) and the fixing ferrule (18), said ring having its bearing faces angularly displaced by angle (α).

14. Tool holder robot according to one of the claims 1 to 13, characterized in that the enclosure (13), within which intervention takes place, is constituted by a steam generator water box, the access opening (16) being constituted by the manhole of said enclosure (13).

FIG.1

FIG. 2

FIG. 3

FIG. 4